# EUROPEAN PATENT APPLICATION

(11) **EP 2 505 904 A2**
(43) Date of publication of application: **03.10.2012**
(21) Application number: 12161360.8
(22) Date of filing: 26.03.2012
(51) Int. Cl.: F16M 11/38, F16M 13/00, A47B 23/04

(54) **Holder for portable electronic device**

(30) Priority: 30.03.2011 TW 100111148
(71) Applicant: Chi Mei Communication Systems, Inc., New Taipei City 236 (TW)
(72) Inventor: Yang, Hsin-Yung, Tu-Cheng, New Taipei (TW); Lu, Li-Houng, Tu-Cheng, New Taipei (TW); Lin, Ching-Min, Tu-Cheng, New Taipei (TW); Yu, Tzu-Cheng, New Taipei City Taiwan (CN)
(74) Representative: Gray, John James

(57) **Abstract**

A holder (100) for holding a portable electronic device can be changed between a folded position and an unfolded position. The holder holds the portable electronic device in the folded position. In the unfolded position, the holder has its supporting portion (20), rear holding portion (30), side holding portions (50), bottom holding portions (70) substantially in two-dimensional form. In the folded position, the supporting portion supports the side holding portions to vertically stand, the rear holding portion is secured above the supporting portion.

## Description

### Field

The present disclosure relates to holders, and particular to a holder for a portable electronic device such as a tablet personal computer.

### BackGround

Tablet Personal Computer (hereinafter portable electronic device), for example may be held at an angle by a holder for easy touching and a comfortable viewing. However, the holder usually has a complex structure and not easy to carry.

Therefore, there is room for improvement within the art.

### Summary

According to a first aspect of the disclosure, a holder includes a base member, a supporting portion, a rear holding portion, two side holding portions, and two bottom holding portions. The base member is foldable and defines a slit. The supporting portion is attached to the base member. The rear holding portion is attached to the base member, adjacent to and separated from the supporting portion by the slit. The two side holding portions are attached to the base member, adjacent to and at two opposite sides of the rear holding portion. The two bottom holding portions are attached to the base member, and each one of the bottom holding portions is positioned adjacent to and between corresponding one side holding portions and the supporting portion. The slit is defined between the supporting portion and the rear holding portion, so that the rear holding portion can fold relative to the supporting portion and secure above the supporting portion, simultaneously driving the bottom holding portions and the side boards to rotate relative to the supporting portion.

According to a second aspect of the disclosure, A holder for holding a portable electronic device can be transferrable between a folded position and an unfolded position. The holder holds the portable electronic device in the folded position. The holder includes a base member being foldable and defining a slit, a supporting portion attached to the base member, a rear holding portion attached to the base member, two side holding portions attached to the base member, and two bottom holding portions attached to the base member. The slit separates the rear holding portion from the supporting portion. In the unfolded position, the supporting portion, the rear holding portion, the side holding portions, the bottom holding portions are substantially in two-dimensional form. In the folded position, the supporting portion, the rear holding portion, the side holding portions, the bottom holding portions are substantially in three-dimensional form for holding a portable electronic device. From one of the unfolded position and the folded position to the other, the front holding portion, the rear holding portion, the side holding portions, the bottom holding portions can fold relative to the supporting portion.

According to a third aspect of the disclosure, a holder for holding a portable electronic device comprises a base member and a supporting assembly attached with the base member. The supporting assembly is non-foldable, the base member is foldable and defines a slit in the supporting assembly, so that the supporting assembly can transfer between a two-dimensional form and a three-dimensional form by folding or unfolding by folding the base member, in the three-dimensional form, the holder is for holding the portable electronic device.

### BRIEF DESCRIPTION OF THE DRAWINGS

Many aspects of the present holder can be better understood with reference to the following drawings. The components in the drawings are not necessarily drawn to scale, the emphasis instead being placed upon clearly illustrating the principles of the present holder. Moreover, in the drawings, like reference numerals designate corresponding parts throughout the several views.

FIG. 1 is an isometric view of a holder for a portable electronic device in an unfolded position according to an exemplary embodiment.

FIG. 2 is a top planar view of the holder shown in FIG. 1.

FIG. 3 is an isometric view of the holder shown in FIG. 1 in a folded position.

FIG. 4 is similar to FIG. 3, but viewed from another angle.

FIG. 5 is an isometric view showing the portable electronic device held by the holder shown in FIG. 3.

FIG. 6 is similar to FIG. 5, but viewed from another angle.

### DETAILED DESCRIPTION

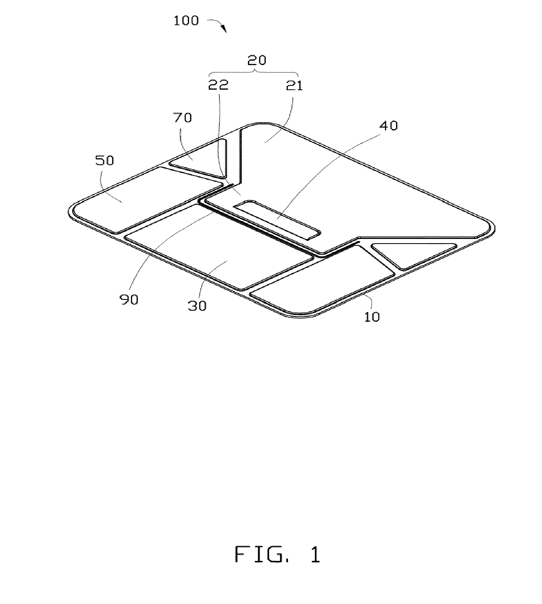

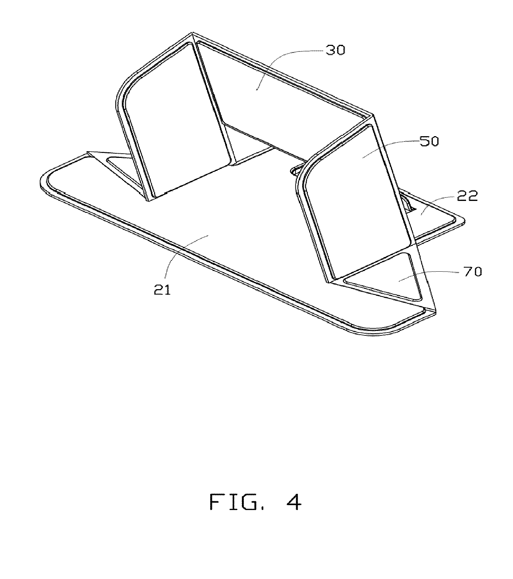

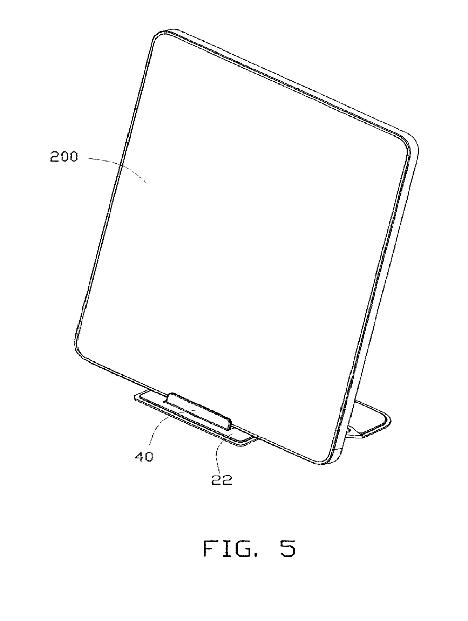

FIGs. 1-4 show an exemplary embodiment of a holder 100 and FIGs. 5-6 show the holder 100 holding a portable electronic device 200 such as tablet personal computer.

FIGs. 1-2 show the holder 100 in an unfolded position where all of the included elements are substantially coplanar with each other. At this position, the holder 100 is maintained in a two-dimensional form. The holder 100 includes a base member 10 at the bottom. The base member 10 has a supporting portion 20, a rear holding portion 30, a front holding portion 40, two side holding portions 50, two bottom holding portions 70 attached (e.g., magnetically attached by magnets) on the same surface. All of the portions 20, 30, 40, 50, 70 <?> are separated from each other. It is to be under stood that all of the portions 20, 30, 40, 50, 70 may be embedded in the same surface of the base member 10.

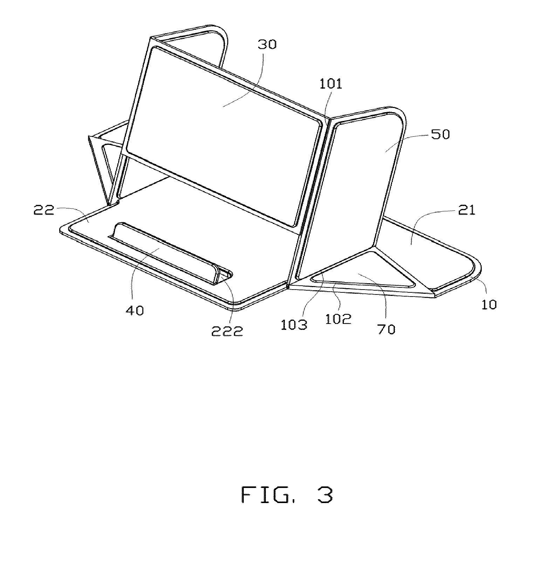

The base member 10 is foldable and thus the holder 100 can be changed between the unfolded position (FIG. 1) and the folded position (FIG. 3). The base member 10 may be made of flexible or soft materials such as man-made fiber, cotton, vinyl, and thermoplastics, which can be folded. The supporting portion 20, the rear holding portion 30, front holding portion 40, the side holding portions 50 and the bottom holding portions 70 are rigid, cannot be folded, and may be made of plastics such as polythene for holding the portable electronic device 200 in the folded position. At this position, the portions 20, 30, 40, 50, 70 can act as a supporting assembly changed from two-dimensional form into a three-dimensional form for supporting the portable electronic device 200.

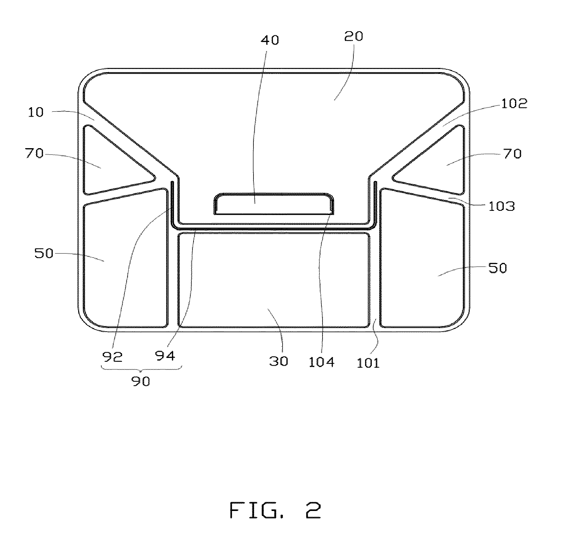

The supporting portion 20 includes a generally trapezoid-shaped first supporting section 21 and a generally rectangular second supporting section 22 connecting the first supporting section 21. The second supporting section 22 is generally positioned at the center of the base member 10, and laterally defines a through slot 222 substantially parallel to the bottom side of the first supporting section 21. The front holding portion 40 has substantially the same shape as the through slot 222 so the front holding portion 40 is received in the through slot 222 to attach to a fourth folding section 104 of the base member 10 which is exposed by the through slot 222 (see FIG. 2). Also, the front holding portion 40 can be rotated out of the through slot 222 by folding the fourth folding section 104.

The rear holding portion 30 is generally rectangular and is positioned above the second supporting section 22. Two side holding portions 50 are generally rectangular and are symmetrically positioned at two opposite sides of the rear holding portion 30. The second supporting section 22 is positioned between two side holding portions 50. Two bottom holding portions 70 are generally triangular and are symmetrically positioned at two sides of the supporting portion 20. Also, each bottom holding portion 70 is located between the corresponding one side holding portion 50 and the supporting portion 20.

Thus, as best shown in FIG. 2, the rear holding portion 30 is located between and adjacent to two side holding portions 50, defining two exposed opposite first foldable sections 101 of the base member 10. Each one of the bottom holding portions 70 is adjacent to the corresponding side of the supporting portion 20, defining two exposed opposite second foldable sections 102 of the base member 10. Each one of the bottom holding portions 70 is located adjacent to corresponding one of the side holding portions 50, defining two exposed opposite third foldable sections 103 of the base member 10. The base member 10 further defines a generally U-shaped slit 90 around the second supporting section 22. The slit 90 separates the rear holding portion 30 from the supporting portion 20. The slit 90 is exposed and has its two vertical sections 92 located between the side holding portions 50 and the second supporting section 22, and its horizontal section 94 located between the rear holding portion 30 and the second supporting section 22.

When using the holder 100 for holding the portable electronic device 200, the holder 100 is required to change from the unfolded position of FIGs. 1-2 to the folded position of FIGs. 3-4. The supporting assembly (including the portions 20, 30, 40, 50, 70) is changed from two-dimensional form to three-dimensional form. During the process, all of the portions 30, 40, 50, 70 lifts and rotates/folds relative to the supporting portion 20. Two bottom holding portions 70 can be lifted and rotated/folded towards the center of the first supporting section 21, folding the second foldable section 102. Correspondingly, two side holding portions 50 are lifted and rotated/folded towards each other. Also, the rear holding portion 30 is lifted and rotates/folds relative to the supporting portion 20 to be positioned above the supporting portion 20. In this case, the first foldable section 101 and the third foldable section 103 are folded.

When the bottom holding portions 70 attach to and cover the first supporting section 21, the bottom holding portions 70 and the supporting portion 20 are folded at an acute angle. Accordingly, the movement of the rear holding portion 30 and the side holding portions 50 is stopped. At this time, the supporting portion 20 contacts, resists against and supports the side holding portions 50 and the rear holding portion 30 to vertically stand. The rear holding portion 30 is secured/held above the supporting portion 20 at an obtuse angle by holding of the side holding portions 50, exposing the second supporting section 22 and the front holding portion 40. When folding the fourth foldable section 104, the front holding portion 40 can rotate upwardly out of the through slot 222 to be a position such as being parallel with the rear holding portion 30. Thus, the folded position of the holder 100 is achieved for holding the portable electronic device 200.

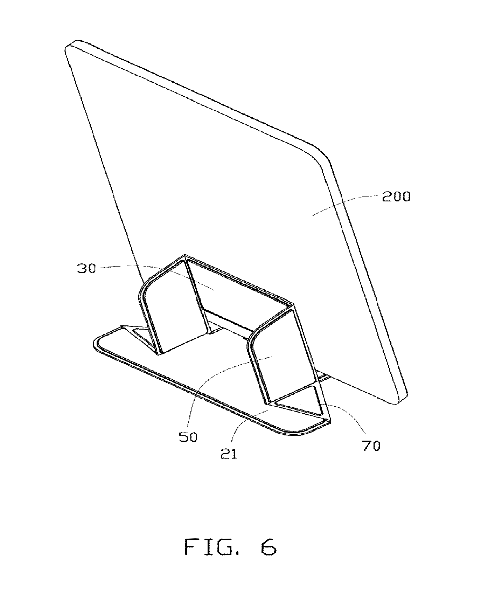

FIGs. 5 and 6 show the portable electronic device 200 can be held by the holder 100. The portable electronic device 200 has its bottom end resisting against the second supporting section 22 and the front holding portion 40, and further has its rear surface supported by the rear holding portion 30, the side holding portions 50, the bottom holding portions 70, and the first supporting section 21.

It is to be understood that even though numerous characteristics and advantages of the present embodiments have been set forth in the foregoing description, together with details of assemblies and functions of various embodiments, the disclosure is illustrative only, and changes may be made in detail, especially in matters of shape, size, and arrangement of parts within the principles of the present disclosure to the full extent indicated by the broad general meaning of the terms in which the appended claims are expressed.

## Claims

1. A holder, comprising:
a base member being foldable and defining a slit;
a supporting portion attached to the base member;
a rear holding portion attached to the base member, adjacent to and separated from the supporting portion by the slit;
two side holding portions attached to the base member, adjacent to and at two opposite sides of the rear holding portion;
two bottom holding portions attached to the base member, each one of the bottom holding portions positioned adjacent to and between corresponding one side holding portions and the supporting portion;
wherein, the slit is defined between the supporting portion and the rear holding portion, so that the rear holding portion can fold relative to the supporting portion and secure above the supporting portion, simultaneously driving the bottom holding portions and the side boards to rotate relative to the supporting portion.

2. The holder as claimed in claim 1, wherein the supporting portion includes a first supporting section and a second supporting section connecting to the first supporting section, the second supporting section defines a through slot receiving the front holding portion, a front holding portion attached to the base member and foldable relative to the supporting portion.

3. The holder as claimed in claim 2, wherein the slit is defined around the second supporting section.

4. The holder as claimed in claim 1, wherein the base member defines two first foldable sections between the side holding portions and the rear holding portion.

5. The holder as claimed in claim 4, wherein the base member defines two second foldable sections between the bottom holding portions and the first supporting section.

6. The holder as claimed in claim 5, wherein the base member defines two third foldable sections between the side holding portions and the bottom holding portions.

7. The holder as claimed in claim 1, wherein the supporting portion includes a first supporting section and a second supporting section connecting to the first supporting section, the holder further comprises a front holding portion, the second supporting section defines a through slot receiving the front holding portion, a front holding portion attached to the base member in the through slot and foldable relative to the supporting portion.

8. A holder for holding a portable electronic device, transferrable between a folded position and an unfolded position, the holder holding the portable electronic device in the folded position, the holder comprising:
a base member being foldable and defining a slit;
a supporting portion attached to the base member;
a rear holding portion attached to the base member, the slit separating the rear holding portion from the supporting portion;
two side holding portions attached to the base member;
two bottom holding portions attached to the base member;
wherein:
in the unfolded position, the supporting portion, the rear holding portion, the side holding portions, the bottom holding portions are substantially in two-dimensional form;
in the folded position, the supporting portion, the rear holding portion, the side holding portions, the bottom holding portions are substantially in three-dimensional form for holding a portable electronic device;
from one of the unfolded position and the folded position to the other, the front holding portion, the rear holding portion, the side holding portions, the bottom holding portions can fold relative to the supporting portion.

9. The holder as claimed in claim 8, wherein in the folded position, the supporting portion resists against and supports the side holding portions to vertically stand, the rear holding portion is secured above the supporting portion by supporting of the side holding portions.

10. The holder as claimed in claim 8, wherein the supporting portion includes a first supporting section and a second supporting section connecting to the first supporting section, the slit is defined between the supporting portion and the rear holding portion, and around the second supporting section.

11. The holder as claimed in claim 8, wherein the base member defines two first foldable sections between the side holding portions and the rear holding portion.

12. The holder as claimed in claim 11, wherein the base member defines two second foldable sections between the bottom holding portions and the first supporting section.

13. The holder as claimed in claim 12, wherein the base member defines two third foldable sections between the side holding portions and the bottom holding portions.

14. The holder as claimed in claim 8, wherein the supporting portion includes a first supporting section and a second supporting section connecting to the first supporting section, the holder further comprises a front holding portion, the second supporting section defines a through slot receiving the front holding portion, the front holding portion foldable relative to the through slot.

15. A holder, for holding a portable electronic device, comprising:
a base member;
a supporting assembly attached with the base member;
the supporting assembly being non-foldable, the base member being foldable and defining a slit in the supporting assembly, so that the supporting assembly can transfer between a two-dimensional form and a three-dimensional form by folding or unfolding by folding the base member, in the three-dimensional form,
the holder is for holding the portable electronic device.

16. The holder as claimed in claim 15, wherein the supporting assembly is made of rigid material that cannot be folded, and the base member is made of soft material that can be folded.

17. The holder as claimed in claim 15, wherein the supporting assembly includes a supporting portion, a rear holding portion, two side holding portions, and two bottom holding portions, the two side holding portions are positioned at two opposite sides of the rear holding portion, each one of the two bottom holding portions are positioned between corresponding one side holding portions and the supporting portion, the slit is defined between the supporting portion and the rear holding portion.
